# EUROPÄISCHE PATENTSCHRIFT

(11) **EP 3 625 099 B1**
(45) Veröffentlichungstag und Bekanntmachung des Hinweises auf die Patenterteilung: **09.08.2023**
(21) Anmeldenummer: 18719530.0
(22) Anmeldetag: 20.04.2018
(51) Int. Cl.: A62C 3/16, B60L 50/64, B60L 50/60, B61D 15/00, B60L 58/26, H01M 50/249, H01M 50/204, H01M 10/48, H01M 50/24, A62C 3/07, B61C 17/06, H01M 10/613, H01M 10/625, H01M 10/6567, H01M 10/6568, B60L 3/00

(54) **SCHIENENFAHRZEUG MIT ENERGIESPEICHER**
RAIL VEHICLE WITH ENERGY STORAGE
VÉHICULE FERROVIAIRE AVEC STOCKAGE D'ÉNERGIE

(30) Priorität: 18.05.2017 AT 2092017
(43) Veröffentlichungstag der Anmeldung: 25.03.2020
(73) Patentinhaber: Plasser & Theurer Export von Bahnbaumaschinen GmbH, 1010 Wien (AT)
(72) Erfinder: WEITERSBERGER, Christian, 4222 St. Georgen an der Gusen (AT)
(86) Internationale Anmeldenummer: PCT/EP2018/060130
(87) Internationale Veröffentlichungsnummer: WO 2018/210526

(56) Entgegenhaltungen:
- EP-A1- 2 187 473
- WO-A1-2014/098675
- DE-A1-102007 046 369
- DE-A1-102009 050 921
- DE-A1-102012 018 051
- DE-A1-102012 214 262
- DE-A1-102013 200 734
- DE-A1-102013 219 481
- DE-A1-102013 225 582
- DE-A1-102014 210 762
- DE-A1-102015 220 601
- DE-B3-102004 054 060
- JP-A- 2016 130 047
- JP-B2- 3 972 383
- JP-B2- 3 972 383
- US-A1- 2008 264 291
- US-A1- 2014 260 217

## Beschreibung

### Gebiet der Technik

Die Erfindung betrifft ein Schienenfahrzeug mit einem auf Schienenfahrwerken abgestützten Wagenrahmen und einem Wagenaufbau mit wenigstens einer Fahrerkabine, wobei ein Fahrantrieb einen mittels eines elektrischen Energiespeichers versorgten Elektromotor umfasst. Zudem betrifft die Erfindung ein Verfahren zur Brandvermeidung bzw. zur Brandlöschung innerhalb eines elektrischen Energiespeichers eines Schienenfahrzeuges.

### Stand der Technik

Nicht nur in der Automobilbranche wird vermehrt durch immer strenger werdende Umweltauflagen auf innovative Antriebskonzepte gesetzt. Auch im Schienenfahrzeugbau sind Akku-Triebwagen und Diesel-Hybrid-Triebwagen seit mehreren Jahren bekannt. Durch immer leistungsstärkere, leichtere und in der Herstellung günstiger werdende Akkumulatoren stellen diese eine für die Zukunft attraktive Alternative dar. Besonders für Tunnelabschnitte, in denen sich eine Installation einer Oberleitung als besonders schwierig und kostenintensiv erweist, und wo durch Verbrennungsmotoren entstehende Emissionen für einen Arbeiter eine große gesundheitliche Belastung darstellen, erweisen sich akkubetriebene Schienenfahrzeuge als besonders vorteilhaft.

Aus der DE 10 2012 216 312 A1 ist beispielsweise ein zum Batteriebetrieb geeignetes Schienenfahrzeug bekannt.

Moderne Akkus benötigen nur noch ein Sechstel der Masse energiegleicher Blei-Akkus. Durch diese immer kompakter werdende Bauweise kommt es in Folge zu einer enormen Energiedichte auf kleinem Raum. Dies stellt eine erhöhte Brandgefahr dar, der auf sichere und verlässliche Weise entgegen gewirkt werden muss.

Das Dokument JP2016130047 A beschreibt ein Schienenfahrzeug mit einer Batterie, die in einer separaten Kammer untergebracht ist, jedoch keine Löschmöglichkeit für die Batterie.

Das Dokument JP3972383B2 beschreibt eine Flüssigkeitskühlung für eine Batterie in einem Fahrzeug.

### Zusammenfassung der Erfindung

Der Erfindung liegt die Aufgabe zugrunde, für ein Schienenfahrzeug der eingangs genannten Art eine Verbesserung gegenüber dem Stand der Technik anzugeben.

Erfindungsgemäß wird diese Aufgabe gelöst durch ein Schienenfahrzeug gemäß Anspruch 1 und ein Verfahren gemäß Anspruch 9. Vorteilhafte Weiterbildungen der Erfindung ergeben sich aus den abhängigen Ansprüchen.

Die Erfindung sieht vor, dass der Energiespeicher eine Temperierung mittels eines flüssigen Dielektrikums aufweist und dass der Wagenaufbau ein von der Fahrerkabine abgetrenntes Abteil umfasst, in dem der elektrische Energiespeicher innerhalb zumindest eines Brandschutzschranks mit einem darüber befindlichen Dielektrikumtank angeordnet ist. Durch die Temperierung mittels des flüssigen Dielektrikums wird eine konstante Betriebstemperatur des sich im Brandschutzschrank befindlichen Energiespeicher gewährleistet. Bei einer auftretenden Störung dient der Dielektrikumtank zur Aufrechterhaltung einer Kühlung des elektrischen Energiespeichers. Zudem garantiert eine räumliche Aufteilung von Fahrerkabine und abgetrenntem Abteil eine sichere Abschottung im Brandfall.

In einer vorteilhaften Ausprägung der Erfindung ist vorgesehen, dass das Abteil begehbar ist und insbesondere mittels einer Brandschutzwand und/oder einem Durchgang von der Fahrerkabine abgetrennt ist. Durch eine Begehbarkeit des Abteils gestalten sich Wartungs- und Inspektionsarbeiten als besonders einfach. Die zusätzliche Brandschutzwand sorgt im Brandfall für einen zusätzlichen Zeitgewinn und Sicherheitsfaktor.

Zudem ist es von Vorteil, wenn der elektrische Energiespeicher einen Akkumulatorblock umfasst, der jeweils aus einem Mastermodul und wenigstens einem Slavemodul gebildet ist und wenn jedes Modul mehrere mit einem Dielektrikum umspülte Akkuzellen umfasst. Durch die modulare Bauweise ist der Energiespeicher gezielt an die betrieblichen Anforderungen und den jeweiligen Einsatzbereich angepasst. Zudem werden die Akkuzellen gleichmäßig mit Dielektrikum umspült und im Betrieb entstehende Wärme effektiv abgeführt.

Dabei ist es sinnvoll, wenn der elektrische Energiespeicher mehrere Akkumulatorblöcke umfasst, die im Brandschutzschrank durch Brandschutzplatten getrennt angeordnet sind. Dadurch werden die Akkumulatorblöcke möglichst platzsparend und effizient im Brandschutzschrank übereinander untergebracht. Eine zusätzliche Trennung durch Brandschutzplatten stellt eine weitere Sicherheitseinrichtung im Brandfall dar.

Erfindungsgemäß ist vorgesehen, dass der Dielektrikumtank über eine mit einem steuerbaren Ventil absperrbare Löschleitung mit dem Brandschutzschrank verbunden ist. Über das geöffnete steuerbare Ventil wird im Brandfall der Brandschutzschrank mit zusätzlichem Dielektrikum aus dem Dielektrikumtank geflutet.

Bei einer weiteren Verbesserung der Erfindung ist der Dielektrikumtank über eine Ausgleichsleitung mit einem Dielektrikumkreislauf zum Temperieren des elektrischen Energiespeichers verbunden. Dadurch wird der Dielektrumtank als Ausgleichsbehälter für den Dielektrikumkreislauf genutzt. Eine Volumenvergrößerung bei Erwärmung des Dielektrikums wird über die Ausgleichsleitung und den Dielektrikumtank kompensiert.

Dabei ist es sinnvoll, wenn der Dielektrikumkreislauf mindestens eine Pumpe, eine Wärmepumpe und einen Temperaturfühler aufweist. Die Pumpe bewirkt eine erzwungene Zirkulation des Dielektrikums im Dielektrikumkreislauf und somit eine optimierte Wärmeabfuhr. Die Wärmepumpe wird für die Klimatisierung der Fahrerkabine genutzt. Dabei wird die im elektrischen Energiespeicher entstehende Wärme aufgenommen und durch die Wärmepumpe auf ein höheres Temperaturniveau angehoben. Über einen Wärmetauscher erfolgt ein Wärmeaustausch mit einem Sekundärmedium zum bedarfsweisen Heizen oder Kühlen der Fahrerkabine. In Folge muss weniger Heiz- bzw. Kühlleistung aufgebracht werden, was bei gleichbleibender Akkukapazität zu einer deutlichen Reichweitensteigerung des Fahrzeugs führt. Der Temperaturfühler überwacht die Temperatur des Dielektrikums und leitet die Werte an eine Steuerung weiter.

Zudem ist es von Vorteil, wenn das Schienenfahrzeug eine Meldeeinheit umfasst und wenn die Meldeeinheit mit einem im Brandschutzschrank angeordneten Rauchsensor und/oder einem Temperatursensor gekoppelt ist. Über den im Brandschutzschrank angeordneten Rauchsensor und/oder Temperatursensor wird ein Brandfall sofort detektiert und eine Notfallmeldung von der Meldeeinheit an eine Notfallzentrale abgegeben.

Eine weitere Verbesserung der Erfindung sieht vor, dass in dem Abteil ein Stromrichter in einem eigenen Stromrichterschrank angeordnet ist und dass in dem Stromrichterschrank mindestens eine Aerosolpatrone angeordnet ist. Durch die Räumliche Auftrennung von Stromrichterschrank und Brandschutzschrank sind diese jeweils im Brandfall voneinander abgeschottet. Sollte es jedoch im Stromrichterschrank zu einem Brandfall kommen, wird diese sofort über eine Aerosolpatrone gelöscht.

Das erfindungsgemäße Verfahren zur Brandvermeidung bzw. zur Brandlöschung innerhalb des elektrischen Energiespeichers sieht vor, dass in einem Außerbetriebszustand bei einer Leckage infolge eines Störfalls austretendes Dielektrikum mittels Dielektrikum aus dem Dielektrikumtank über eine geöffnete Löschleitung kompensiert wird. Durch das geöffnete steuerbare Ventil läuft im Falle einer Leckage oder einer durchgebrannten Akkuzelle Dielektrikum ungehindert durch den Brandschutzschrank.

Erfindungsgemäß ist vorgesehen, dass bei einer Außerbetriebsetzung des Schienenfahrzeugs die Löschleitung mittels eines stromlos gewordenen Magnetventils geöffnet wird. Dadurch bleibt beim abgestellten Schienenfahrzeug auch bei einem Ausfall der Stromversorgung das Magnetventil immer geöffnet, damit das Dielektrikum im Brandfall ungehindert in den Brandschutzschrank fließen kann.

Des Weiteren ist es von Vorteil, wenn in einem Betriebszustand bei einem innerhalb des elektrischen Energiespeichers detektierten Temperaturlimit eine Kühlleistung eines Dielektrikumkreislaufes erhöht wird und wenn eine Volumenänderung des Dielektrikums über eine Ausgleichsleitung zwischen dem Dielektrikumkreislauf und dem Dielektrikumtank kompensiert wird. Dabei wird laufend die Temperatur des Dielektrikums mittels Temperaturfühler oder die Temperatur an einer Messstelle im Brandschutzschrank erfasst. Bei Erreichung des Temperaturlimits wird durch eine Steigerung der Dielektrikumzirkulation die Kühlleistung erhöht.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Seitenansicht Schienenfahrzeug
- Fig. 2: Draufsicht Kabine
- Fig. 3: Ansicht Brandschutzschrank
- Fig. 4: Detailansicht Akkumulatorblöcke
- Fig. 5: Schema Thermomanagement Akku
- Fig. 6: Schema Brandschutz Akku
- Fig. 7: Schema Stromrichterschrank

### Beschreibung der Ausführungsformen

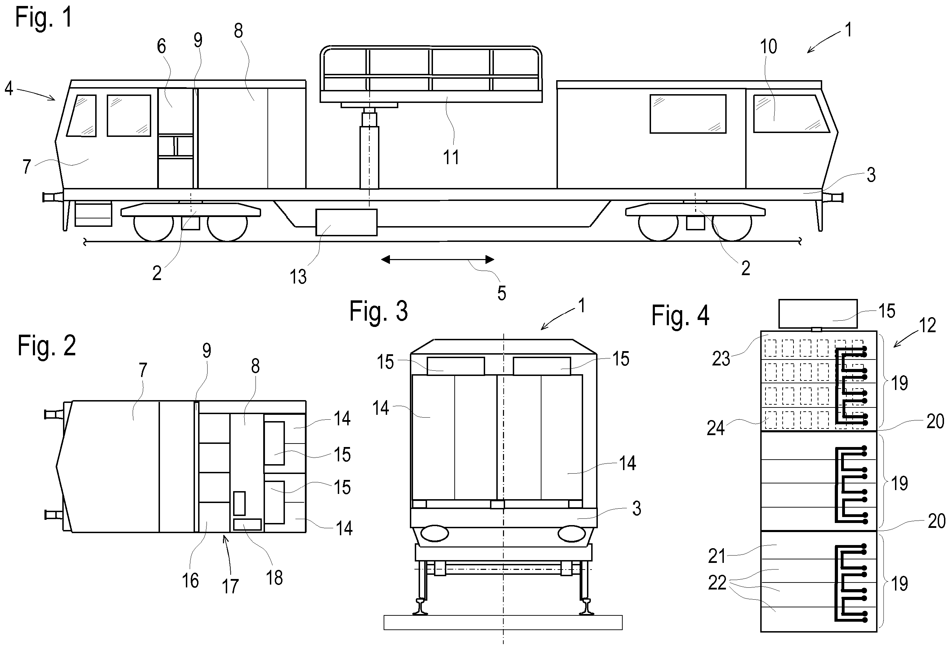

Fig. 1 zeigt ein vereinfacht dargestelltes Schienenfahrzeug 1 mit einem auf Schienenfahrwerken 2 abgestützten Wagenrahmen 3 und einem Wagenaufbau 4, der in Maschinenlängsrichtung 5 einen Durchgang 6 zwischen einer endseitigen Fahrerkabine 7 und einem Abteil 8 aufweist. Zusätzlich zum Durchgang 6 ist das Abteil 8 gegenüber der Fahrerkabine 7 mittels einer Brandschutzwand 9 abgetrennt. Auf der gegenüberliegenden Stirnseite befindet sich eine zweite Fahrerkabine 10. Zwischen dem Abteil 8 und der zweiten Fahrerkabine 10 ist eine Arbeitsbühne 11 angeordnet. Ein Fahrantrieb umfasst einen mittels eines elektrischen Energiespeichers 12 versorgten Elektromotor 13.

In Fig. 2 ist eine Draufsicht des Abteils 8 dargestellt. Darin sind an der von der Fahrerkabine 7 abgewandten Seite zwei doppelte Brandschutzschränke 14 nebeneinander angeordnet. Über jedem Doppelschrank 14 befindet sich jeweils ein Dielektrikumtank 15. Gegenüber sind Stromrichter 16 in Stromrichterschränken 17 positioniert. Zwischen den Brandschutzschränken 14 und den Stromrichterschränken 17 ist ein begehbarer Bereich vorgesehen. In diesem Bereich ist eine Wärmepumpe 18 angeordnet, um eine vom elektrischen Energiespeicher 12 abgegebene Wärme zu nutzen.

Fig. 3 zeigt zur Verdeutlichung der Anordnung einen schematischen Schnitt durch das Abteil 8 mit einer Frontansicht der beiden doppelten Brandschutzschränke 14 und den darüber befindlichen Delektrikumtanks 15. Gegenüber einem den Wagenrahmen 3 abdeckenden Boden sind die Brandschutzschränke 14 mittels mehrerer Steher distanziert angeordnet. Auf diese Weise ist ein einfacher Einbau und Ausbau der Brandschutzschränke 14 mittels eines Gabelstaplers möglich.

In Fig. 4 ist der schematische Aufbau des elektrischen Energiespeichers 12 innerhalb eines Brandschutzschranks 14 dargestellt. Dabei sind übereinander drei Akkumulatorblöcke 19 angeordnet, die jeweils durch Brandschutzplatten 20 voneinander abgeschottet sind. Auch die Wände des Brandschutzschranks 14 sind mit Brandschutzplatten ausgekleidet. Ein Akkumulatorblock 19 setzt sich jeweils aus einem Mastermodul 21 und drei einzelnen Slavemodulen 22 zusammen. Jedes Modul 21, 22 setzt sich aus mehreren mit einem Dielektrikum 23 umspülten Akkuzellen 24 zusammen.

Mittels des Dielektrikums 23 werden die Akkuzellen 24 temperiert und somit in einem optimalen Temperaturbereich betrieben. Bei einem Überhitzen oder Entzünden einer Akkuzelle 24 fungiert das Dielektrikum 23 zudem als Löschmittel, das ein Übergreifen auf benachbarte Akkuzellen 24 verhindert. Zum Temperieren des Dielektrikums 23 ist ein Dielektrikumkreislauf 25 vorgesehen.

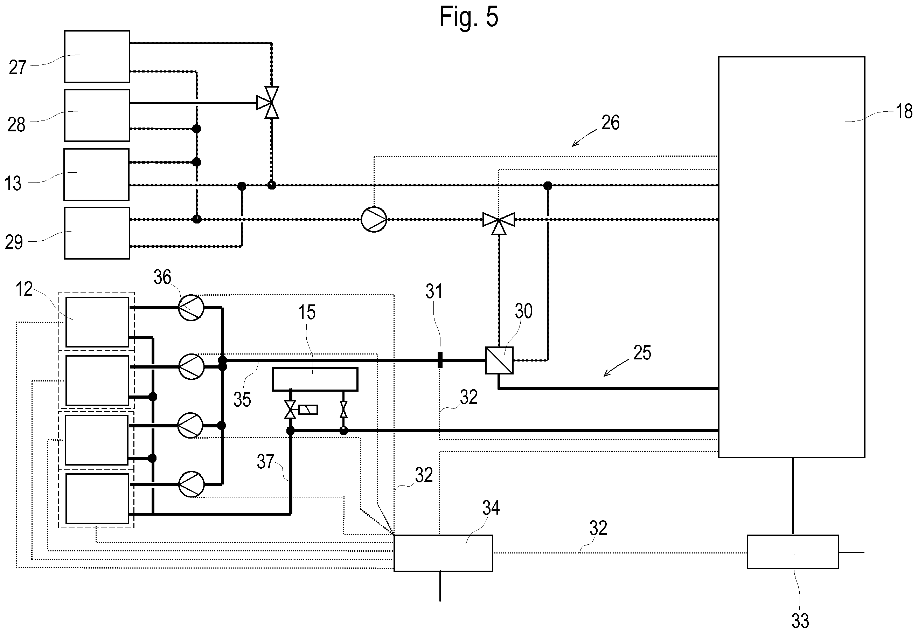

Fig. 5 zeigt in einem schematischen Blockschaltbild ein Thermomanagement des Energiespeichers 12 mit dem Dielektrikumkreislauf 25 und einem zweiten Kühlkreislauf 26, der zum Temperieren der Fahrerkabine 7 und sonstiger Aggregate vorgesehen ist. Der zweite Kühlkreislauf 26 wird mit einem Glykolgemisch betrieben und umfasst einen Außenkühler 27 sowie einen Zuheizer 28, falls eine in der Wärmepumpe 18 bereitgestellte Wärme nicht ausreicht.

An den zweiten Kühlkreislauf 26 angeschlossene Aggregate sind beispielsweise der Elektromotor 13 und ein Generator 29, der an einen Verbrennungsmotor gekoppelt ist und zum Aufladen des elektrischen Energiespeichers 12 dient. Über einen Wärmetauscher 30 findet ein Wärmeaustausch zwischen dem Dielektrikumkreislauf 25 und dem zweiten Kühlkreislauf 26 statt.

Der Dielektrikumkreislauf 25 umfasst einen Temperaturfühler 31, der über eine Signalleitung 32 mit der Wärmepumpe 18 verbunden ist. Versorgt wird die Wärmepumpe 18 über einen Stromrichter 33, der über eine weitere Signalleitung 32 mit einer Steuerung 34 verbunden ist.

Von der Wärmepumpe 18 über den Wärmetauscher 30 führt eine Zuleitung 35 zu Pumpen 36, die in jeden Energiespeicher 12 innerhalb eines Brandschutzschranks 14 mit einem Dielektrikum 23 pumpen. Durch eine geregelte Pumpleistung wird jeder Energiespeicher 12 innerhalb eines Brandschutzschranks 14 separat temperiert. Eine Rückleitung 37 führt das Dielektrikum 23 zur Wärmepumpe zurück.

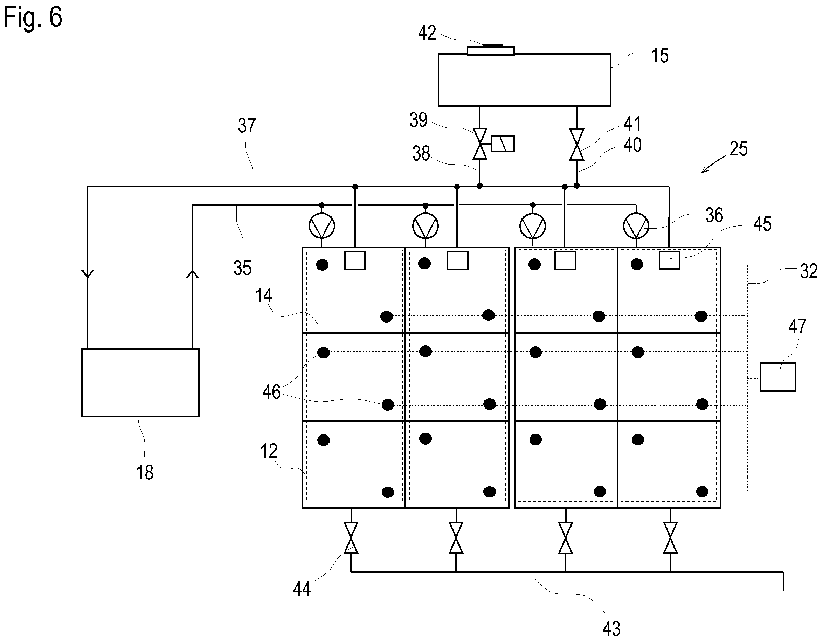

In Fig. 6 ist der Dielektriumkreislauf 25 ohne zweiten Kühlkreislauf 26 dargestellt. Dabei sind vier jeweils in einem Brandschutzschrank 14 untergebrachte Energiespeicher 12 mit einem gemeinsamen Dielektrikumtank 15 angeordnet. Dabei ist der Dielektrikumtank 15 mittels einer Löschleitung 38 an die oberhalb der Brandschutzschränke 14 geführte Rückleitung 37 angeschlossen. Im regulären Betrieb ist die Löschleitung 38 mittels eines unter Strom stehenden Magnetventils 39 abgesperrt.

Bei abgestelltem Schienenfahrzeug 1 oder bei Stromausfall ist das Magnetventil 39 geöffnet. Sobald infolge einer schadhaften Akkuzelle 24 eine Leckage im System entsteht, fließt infolge der Schwerkraft automatisch Dielektrikum 23 über die Löschleitung 38 und die Rückleitung 37 in den betroffenen Energiespeicher 12. Die schadhafte Akkuzelle 24 bleibt somit auch bei stromlosem Schienenfahrzeug 1 von Dielektrikum 23 umströmt, sodass eine Überhitzung oder ein Zellenbrand eingedämmt werden kann, bevor benachbarte Akkuzellen 24 Schaden erleiden.

Ein Volumenausgleich des Dielektrikums 23 zwischen dem Dielektrikumkreislauf 25 und dem Dielektrikumtank 15 findet dabei über deine Ausgleichsleitung 40 statt. Diese ist mit einem Absperrventil 41 ausgestattet, um den Dielektrikumtank 15 für Wartungszwecke abzuschließen. Zudem umfasst der Dielektrikumtank 15 einen Deckel mit einem Entlüftungsventil 42. Für Wartungszwecke ist auch an einer Unterseite jedes Brandschutzschrankes 14 eine Ablassleitung 43 mit einem Ablassventil 44 angeordnet.

Als zusätzlich Sicherheitsmaßnahme sind jedem Akkumulatorblock 19 des Energiespeichers 12 sind zwei Temperatursensoren 46 zugeordnet. In oberen Bereich des jeweiligen Energiespeichers 12 ist zudem ein Rauchsensor 45 angeordnet. Über eine Signalleitung 32 sind diese Sensoren 45, 46 mit einer Meldeeinheit 45 verbunden. Sobald eine vorgegebene Temperaturschranke überschritten oder Rauch detektiert wird, erfolgt eine Meldung an eine Notfallzentrale. Günstigerweise umfasst die Meldeeinheit 47 eine eigene Batterie, um auch bei abgestelltem Fahrzeug 1 einsatzbereit zu sein.

Zudem ist jeder Temperatursensor 46 über eine Signalleitung 32 mit der Steuerung 34 verbunden. Bei einer detektierten erhöhten Erwärmung eines Energiespeichers 12 wird mittels der Steuerung 34 die Pumpleistung der entsprechenden Pumpe 36 erhöht, Die damit erreichte Kühlleistungserhöhung für die zusätzliche Wärme ab und verhindert das Überschreiten einer kritischen Betriebstemperatur.

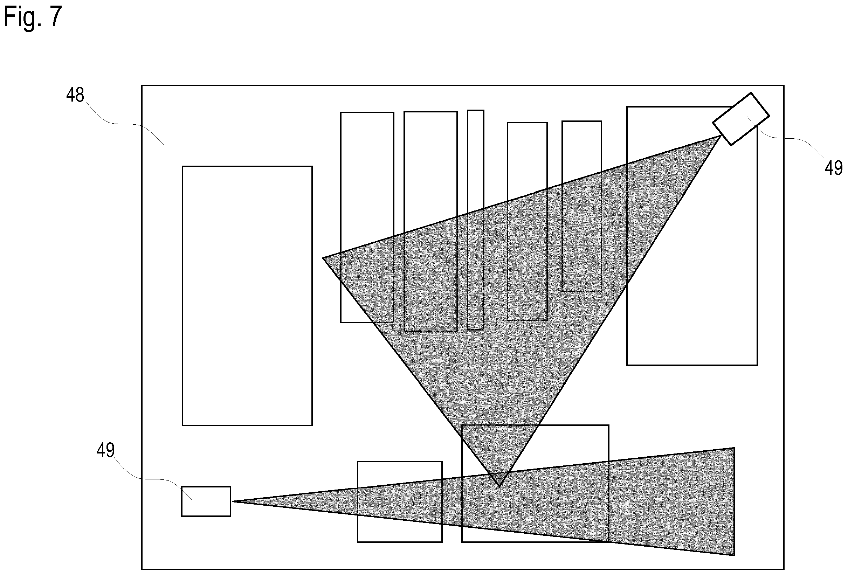

Fig. 7 zeigt einen schematisch dargestellten Stromrichterschrank 48 mit darin befindlichem Stromrichter 33, in dem im Brandfall zur Löschung zwei Aerosolpatronen 49 angeordnet sind.

Die Erfindung ist durch die nachfolgenden Ansprüche definiert.

## Patentansprüche

1. Schienenfahrzeug (1) mit einem auf Schienenfahrwerken (2) abgestützten Wagenrahmen (3) und einem Wagenaufbau (4) mit wenigstens einer Fahrerkabine (7), wobei ein Fahrantrieb einen mittels eines elektrischen Energiespeichers (12) versorgten Elektromotor (13) umfasst, wobei der elektrische Energiespeicher (12) innerhalb zumindest eines, von der Fahrerkabine (7) abgetrennten Brandschutzschranks (14) angeordnet ist, **dadurch gekennzeichnet, dass** der Energiespeicher (12) eine Temperierung mittels eines flüssigen, zudem als Löschmittel fungierenden, Dielektrikums (23) aufweist, wobei über dem Brandschutzschrank (14) ein Dielektrikumtank (15) angeordnet ist wobei der Dielektrikumtank (15) in der Weise über eine mit einem steuerbaren Ventil (39) absperrbare Löschleitung (38) mit dem Brandschutzschrank (14) verbunden ist, dass bei einer Außerbetriebsetzung des Schienenfahrzeugs (1) die Löschleitung (38) mittels des stromlos gewordenen Ventils (39) geöffnet wird .

2. Schienenfahrzeug (1) nach Anspruch 1, **dadurch gekennzeichnet, dass** das Abteil (8) begehbar ist und insbesondere mittels einer Brandschutzwand (9) und/oder einem Durchgang (6) von der Fahrerkabine (7) abgetrennt ist.

3. Schienenfahrzeug (1) nach Anspruch 1 oder 2, **dadurch gekennzeichnet, dass** der elektrische Energiespeicher (12) einen Akkumulatorblock (19) umfasst, der jeweils aus einem Mastermodul (21) und wenigstens einem Slavemodul (22) gebildet sind und dass jedes Modul (21, 22) mehrere mit einem Dielektrikum (23) umspülte Akkuzellen (24) umfasst.

4. Schienenfahrzeug (1) nach einem der Ansprüche 1 bis 3, **dadurch gekennzeichnet, dass** der elektrische Energiespeicher (12) mehrere Akkumulatorblöcke (19) umfasst, die im Brandschutzschrank (14) durch Brandschutzplatten (20) getrennt angeordnet sind.

5. Schienenfahrzeug (1) nach einem der Ansprüche 1 bis 4, **dadurch gekennzeichnet, dass** der Dielektrikumtank (15) über eine Ausgleichsleitung (40) mit einem Dielektrikumkreislauf (25) zum Temperieren des elektrischen Energiespeichers (12) verbunden ist.

6. Schienenfahrzeug (1) nach Anspruch 5, **dadurch gekennzeichnet, dass** der Dielektrikumkreislauf (25) mindestens eine Pumpe (36), eine Wärmepumpe (18) und einen Temperaturfühler (31) aufweist.

7. Schienenfahrzeug (1) nach einem der Ansprüche 1 bis 6, **dadurch gekennzeichnet, dass** das Schienenfahrzeug (1) eine Meldeeinheit (47) umfasst und dass die Meldeeinheit (47) mit einem im Brandschutzschrank (14) angeordneten Rauchsensor (45) und/oder einem Temperatursensor (46) gekoppelt ist.

8. Schienenfahrzeug (1) nach einem der Ansprüche 1 bis 7, **dadurch gekennzeichnet, dass** in dem Abteil (8) ein Stromrichter (16) in einem eigenen Stromrichterschrank (48) angeordnet ist und dass in dem Stromrichterschrank (48) mindestens eine Aerosolpatrone (49) angeordnet ist.

9. Verfahren zur Brandvermeidung bzw. zur Brandlöschung innerhalb eines elektrischen Energiespeichers (12) eines Schienenfahrzeuges (1) nach einem der Ansprüche 1 bis 8, **dadurch gekennzeichnet, dass** in einem Außerbetriebszustand bei einer Leckage infolge eines Störfalls austretendes Dielektrikum (23) mittels Dielektrikum (23) aus dem Dielektrikumtank (15) über die geöffnete Löschleitung (38) kompensiert wird.

10. Verfahren nach Anspruch 9, **dadurch gekennzeichnet, dass** ein Dielektrikumtank (15) über eine Ausgleichsleitung (40) mit einem Dielektrikumkreislauf (25) zum Temperieren des elektrischen Energiespeichers (12) verbunden ist und dass in einem Betriebszustand bei einem innerhalb des elektrischen Energiespeichers (12) detektierten Temperaturlimit eine Kühlleistung des Dielektrikumkreislaufes (25) erhöht wird und dass eine Volumenänderung des Dielektrikums (23) über die Ausgleichsleitung (40) zwischen dem Dielektrikumkreislauf (25) und dem Dielektrikumtank (15) kompensiert wird.

## Claims

1. A rail vehicle (1) having a vehicle frame (3), supported on on-track undercarriages (2), and a vehicle superstructure (4) with at least one driver's cabin (7), wherein a motive drive comprises an electric motor (13) supplied by means of an electric energy store (12) which is arranged within at least one fire protection cabinet (14) separated from the driver's cabin (7), **characterized in that** the energy store (12) has a tempering by means of a liquid dielectric (23) which additionally functions as an extinguishing medium, wherein a dielectric tank (15) is located above the fire protection cabinet (14) wherein the dielectric tank (15) is connected to the fire protection cabinet (14) via a fire-fighting line (38) lockable by a controllable valve (39) in that way that in the event of a shut-down of the rail vehicle (1), the fire-fighting line (38) is opened by means of the valve (39) which has become currentless.

2. A rail vehicle (1) according to claim 1, **characterized in that** the compartment (8) is accessible and is separated from the driver's cabin (7) in particular by means of a fire protection wall (9) and/or a passage (6).

3. A rail vehicle (1) according to claim 1 or 2, **characterized in that** the electric energy store (12) comprises an accumulator block (19) which is formed in each case of a master module (21) and at least one slave module (22), and that each module (21, 22) has several battery cells (24) around which a dielectric (23) flows.

4. A rail vehicle (1) according to one of claims 1 to 3, **characterized in that** the electric energy store (12) comprises several accumulator blocks (19) which are arranged separated by fire protection panels (20) in the fire protection cabinet (14).

5. A rail vehicle (1) according to one of claims 1 to 4, **characterized in that** the dielectric tank (15) is connected via a compensating line (40) to a dielectric circuit (25) for tempering the electric energy store (12).

6. A rail vehicle (1) according to claim 5, **characterized in that** the dielectric circuit (25) comprises at least one pump (36), a heat pump (18) and a temperature probe (31).

7. A rail vehicle (1) according to one of claims 1 to 6, **characterized in that** the rail vehicle (1) has an alarm unit (47), and that the alarm unit (47) is coupled to a smoke sensor (45) arranged in the fire protection cabinet (14) and/or to a temperature sensor (46).

8. A rail vehicle (1) according to one of claims 1 to 7, **characterized in that** a power converter (16) is arranged in a separate power converter cabinet (48) in the compartment (8), and that at least one aerosol cartridge (49) is arranged in the power converter cabinet (48).

9. A method of fire prevention or fire fighting within an electric energy store (12) of a rail vehicle (1) according to one of claims 1 to 8, **characterized in that,** in an inoperative state, dielectric (23) leaking in the event of a leakage as a result of a malfunction is compensated by dielectric (23) from the dielectric tank (15) via an opened fire-fighting line (38).

10. A method according to claim 9, **characterized in that** the dielectric tank (15) is connected via a compensating line (40) to a dielectric circuit (25) for tempering the electric energy store (12) and that in an operating state, in case a temperature limit is detected within the electric energy store (12), a cooling capacity of the dielectric circuit (25) is increased, and that a change in volume of the dielectric (23) is compensated via a compensating line (40) between the dielectric circuit (25) and the dielectric tank (15).

## Revendications

1. Véhicule ferroviaire (1) avec un châssis de wagon (3) appuyé sur des mécanismes de roulement ferroviaires (2) et une structure de wagon (4) avec au moins une cabine de conducteur (7), dans lequel un entraînement de déplacement comprend un moteur électrique (13) alimenté au moyen d'un accumulateur d'énergie électrique (12), dans lequel l'accumulateur d'énergie électrique (12) est disposé au sein d'au moins une armoire de protection contre le feu (14) séparée de la cabine de conducteur (7), **caractérisé en ce que** l'accumulateur d'énergie (12) présente un équilibrage de température au moyen d'un diélectrique liquide (23), fonctionnant en outre en tant qu'agent extincteur, dans lequel un réservoir de diélectrique (15) est disposé au-dessus de l'armoire de protection contre le feu (14), dans lequel le réservoir de diélectrique (15) est connecté à l'armoire de protection contre le feu (14) par le biais d'une conduite d'extinction (38) pouvant être fermée avec une soupape pouvant être commandée (39) de telle sorte que la conduite d'extinction (38) est ouverte au moyen de la soupape devenue sans courant (39) lors d'une mise hors service du véhicule ferroviaire (1).

2. Véhicule ferroviaire (1) selon la revendication 1, **caractérisé en ce que** le compartiment (8) est praticable et est notamment séparé de la cabine de conducteur (7) au moyen d'une paroi de protection contre le feu (9) et/ou d'un passage (6).

3. Véhicule ferroviaire (1) selon la revendication 1 ou 2, **caractérisé en ce que** l'accumulateur d'énergie électrique (12) comprend un bloc d'accumulateur (19) qui sont à chaque fois formés d'un module maître (21) et d'au moins un module esclave (22), et que chaque module (21, 22) comprend plusieurs éléments d'accumulateur (24) rincés avec un diélectrique (23).

4. Véhicule ferroviaire (1) selon une des revendications 1 à 3, **caractérisé en ce que** l'accumulateur d'énergie électrique (12) comprend plusieurs blocs d'accumulateur (19) qui sont disposés dans l'armoire de protection contre le feu (14) séparément par des plaques de protection contre le feu (20).

5. Véhicule ferroviaire (1) selon une des revendications 1 à 4, **caractérisé en ce que** le réservoir de diélectrique (15) est connecté à un circuit de diélectrique (25) pour l'équilibrage de température de l'accumulateur d'énergie électrique (12) par le biais d'une conduite de compensation (40).

6. Véhicule ferroviaire (1) selon la revendication 5, **caractérisé en ce que** le circuit de diélectrique (25) présente au moins une pompe (36), une pompe à chaleur (18) et un capteur de température (31).

7. Véhicule ferroviaire (1) selon une des revendications 1 à 6, **caractérisé en ce que** le véhicule ferroviaire (1) comprend une unité d'avertissement (47) et que l'unité d'avertissement (47) est couplée à un capteur de fumée (45) disposé dans l'armoire de protection contre le feu (14) et/ou un capteur de température (46).

8. Véhicule ferroviaire (1) selon une des revendications 1 à 7, **caractérisé en ce qu'**un convertisseur (16) est disposé dans le compartiment (8) dans une armoire de convertisseur propre (48) et qu'au moins une cartouche aérosol (49) est disposée dans l'armoire de convertisseur (48).

9. Procédé de prévention d'incendie ou d'extinction d'incendie au sein d'un accumulateur d'énergie électrique (12) d'un véhicule ferroviaire (1) selon une des revendications 1 à 8, **caractérisé en ce que** du diélectrique (23) sortant lors d'une fuite à la suite d'un incident est compensé dans un état hors service au moyen de diélectrique (23) provenant du réservoir de diélectrique (15) par le biais de la conduite d'extinction ouverte (38).

10. Procédé selon la revendication 9, **caractérisé en ce qu'**un réservoir de diélectrique (15) est connecté à un circuit de diélectrique (25) pour l'équilibrage de température de l'accumulateur d'énergie électrique (12) par le biais d'une conduite de compensation (40) et qu'une puissance de refroidissement du circuit de diélectrique (25) est augmentée dans un état de fonctionnement dans le cas d'une limite de température détectée au sein de l'accumulateur d'énergie électrique (12) et qu'un changement de volume du diélectrique (23) est compensé par le biais de la conduite de compensation (40) entre le circuit de diélectrique (25) et le réservoir de diélectrique (15).
